# EUROPÄISCHE PATENTSCHRIFT

(11) **EP 2 449 273 B1**
(45) Veröffentlichungstag und Bekanntmachung des Hinweises auf die Patenterteilung: **18.05.2016**
(21) Anmeldenummer: 10723581.4
(22) Anmeldetag: 28.05.2010
(51) Int. Cl.: F16C 33/46, F16C 3/00, F16F 15/26, F16C 19/46, F16C 33/64

(54) **LAGERANORDNUNG MIT EINER UNWUCHTWELLE UND EINEM NADELLAGER**
BEARING ARRANGEMENT WITH AN UNBALANCED SHAFT AND A NEEDLE BEARING
ENSEMBLE DE PALIER AVEC UN ARBRE À BALOURD ET UN PALIER À AIGUILLES

(30) Priorität: 30.06.2009 DE 102009031064
(43) Veröffentlichungstag der Anmeldung: 09.05.2012
(73) Patentinhaber: Schaeffler Technologies AG & Co. KG, 91074 Herzogenaurach (DE)
(72) Erfinder: HESS, Stefan, 91074 Herzogenaurach (DE); SOLFRANK, Peter, 96158 Frensdorf (DE); ULLMANN, Patrick, 91074 Herzogenaurach (DE); KERN, Alexander, 91056 Erlangen (DE)
(86) Internationale Anmeldenummer: PCT/EP2010/057475
(87) Internationale Veröffentlichungsnummer: WO 2011/000645

(56) Entgegenhaltungen:
- AT-U1- 7 885
- DE-A1-102007 027 990
- JP-A- 2006 002 904
- US-A- 3 586 406
- GRUBER G ET AL: "Integriertes Ausgleichswellensystem des neuen Vierzylinder-Dieselmotors von BMW" MTZ MOTORTECHNISCHE ZEITSCHRIFT, VIEWEG VERLAG, WIESBADEN, DE, Bd. 69, Nr. 6, 1. Juni 2008 (2008-06-01), Seiten 518-524, XP001518700 ISSN: 0024-8525

## Beschreibung

### Gebiet der Erfindung

Die Erfindung betrifft eine Lageranordnung nach dem Oberbegriff des Anspruchs 1.

### Hintergrund der Erfindung

Eine derartige Lageranordnung ist aus der Motortechnischen Zeitschrift MTZ 06/2008, S. 518-524 in Form einer nadelgelagerten Unwuchtwelle als Teil eines Massenausgleichsgetriebes einer Brennkraftmaschine bekannt. An die Innenlaufbahn auf dem dort vollumfänglich radial zurückspringenden Lagerzapfen werden hohe Anforderungen an die Oberflächenhärte und -rauhigkeit gestellt, um eine verschleißfeste und akustisch akzeptable Wälzlagerung zu gewährleisten.

Der Wärmeeintrag beim lokalen Härten der Welle am Lagerzapfen - in der Regel durch Induktiverwärmung des Lagerzapfens - kann jedoch eine übermäßige Aufheizung der sich dort an die Innenlaufbahn unmittelbar anschließenden Axialschultern bewirken, da die Wärme aufgrund dieser Lagerzapfengeometrie nur ungünstig abgeleitet wird. Dies birgt das Risiko von Spannungsrissen in den Axialschultern und den angrenzenden Wellenabschnitten.

### Aufgabe der Erfindung

Der Erfindung liegt die Aufgabe zu Grunde, eine Lageranordnung der eingangs genannten Art mit möglichst geringem Aufwand konstruktiv so zu verbessern, dass die Wärmebehandlung des Lagerzapfens prozesssicher durchgeführt werden kann.

### Zusammenfassung der Erfindung

Erfindungsgemäß wird diese Aufgabe dadurch gelöst, dass beidseits der Innenlaufbahn verlaufende und jeweils so dimensionierte Freistiche vorgesehen sind, dass über den gesamten Umfangsbereich der Axialschultern deren Axialabstand zueinander deutlich größer als die dazwischen bestehende Breite der Innenlaufbahn ist. Während der Wärmebehandlung der Lagerzapfen wird die Wärme zu einem großen Teil über die Freistiche abgeleitet, so dass die Axialschultern in einem deutlich geringeren Maße aufgeheizt werden. Das eingangs erläuterte Risiko für das Auftreten von Spannungsrissen wird somit deutlich reduziert.

Bei der Erfindung wird die Welle als Unwuchtwelle mit einem zu deren Rotationsachse exzentrischen Massenschwerpunkt ausgebildet, wobei die Innenlaufbahn relativ zu der die Innenlaufbahn in einer Lastzone beaufschlagenden Unwuchtlast im wesentlichen stillsteht und wobei die Lastzone innerhalb des deutlich weniger als 360° und vorzugsweise zwischen 170° und 190° betragenden Umfangsbereichs der Axialschultern verläuft. Anders als im eingangs zitierten Stand der Technik sind also die Axialschultern nicht vollumfänglich mit entsprechend kreisringförmigen Axialanlaufflächen, sondern lediglich lokal mit kreisringstückförmigen Axialanlaufflächen im Bereich der stationären Lastzone auf der Innenlaufbahn ausgebildet. Während der Käfig des Nadellagers bei dieser konstruktiven Ausgestaltung nach wie vor ausreichend axial am Lagerzapfen gehaltert ist, bewirkt der Entfall der Axialschulterabschnitte, die der Lastzone diametral gegenüberliegen, eine vorteilhafte Massenreduzierung der Unwuchtwelle.

Wie es aus der EP 1 775 484 A1 grundsätzlich bekannt ist, kann eine besonders signifikante Massenreduzierung der Unwuchtwelle zudem dadurch erzielt werden, dass die Innenlaufbahn eine umfangsveränderliche Breite aufweist und ausgehend von der Lastzone außerhalb der Lastzone deutlich verjüngt oder mit einer örtlichen Breite von Null am Umfang unterbrochen ist. Ein Lagerzapfen mit unterbrochener Innenlaufbahn weist keinen kreisförmigen Querschnitt auf. Mögliche Querschnittsformen basieren vielmehr auf Kreisquerschnitten mit fehlendem Kreissektor oder -segment oder sind Freiformen, wie beispielsweise in der WO 2007/121861 A1 offenbart.

In diesen Fällen ist es zweckmäßig, die Innenlaufbahn mittels Honen feinzubearbeiten, da die von der reinen Zylinderform abweichende Geometrie der Innenlaufbahn einer Feinschleifbearbeitung, beispielsweise Bandfinishen, nicht oder nicht problemlos zugänglich ist. Die beidseits der Innenlaufbahn verlaufenden Freistiche sind dabei so zu dimensionieren, dass nicht nur der übermäßige Wärmeeintrag in die Axialschultern vermieden wird, sondern auch der für ein gleichmäßiges Bearbeitungsergebnis erforderliche Überlauf des Honwerkzeugs beidseitig in axialer Richtung gegeben ist. Für die Schwingamplitude bei Finish-Prozessen ist eine Breite von mindestens 2 mm pro Seite vorteilhaft; je nach Abmessungen und Geometrie des Bauteiles kann die Freistichbreite auf beiden Seiten auch deutlich größer ausgeführt werden.

Zudem kann es vorgesehen sein, dass die zwischen den Axialschultern bestehende Breite der Innenlaufbahn größer als die Länge der Nadelrollen ist, wobei der Käfig von umfangsverteilten Öffnungen durchsetzt ist, die axial beidseits der Nadelrollen verlaufen. Im bevorzugten Falle eines spritzgegossenen Kunststoffkäfigs können diese Öffnungen werkzeugbedingt erforderlich sein, während sich bei einem Metallkäfig Vorteile hinsichtlich Gewicht, homogener Massenverteilung über die Breite des Käfigs und verbesserter Ölnebelschmierung der Nadelrollen ergeben können.

### Kurze Beschreibung der Zeichnung

Weitere Merkmale und Ausgestaltungen der Erfindung ergeben sich aus der nachfolgenden Beschreibung und aus den Zeichnungen, in denen ein Ausführungsbeispiel einer erfindungsgemäßen Lageranordnung dargestellt ist. Es zeigen:
- Figur 1: eine Unwuchtwelle in perspektivischer Darstellung ohne Nadellager;
- Figur 2: einen der beiden Lagerzapfen als vergrößerte Einzelheit und
- Figur 3: den Lagerzapfen gemäß Figur 2 mit darauf montiertem Nadellager.

### Ausführliche Beschreibung der Zeichnung

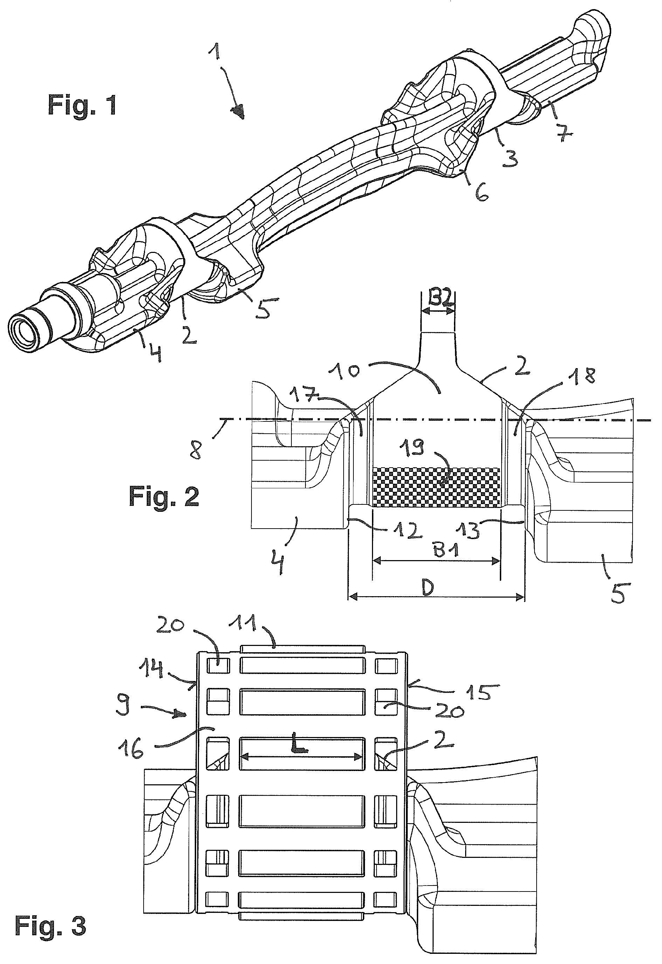

Figur 1 zeigt eine Unwuchtwelle 1 für ein Massenausgleichsgetriebe, das zum Ausgleich der freien Massenkräfte- und momente zweiter Ordnung einer Brennkraftmaschine in Vierzylinder-Reihenbauweise dient. Das Massenausgleichsgetriebe umfasst in diesem Fall zwei derartige Unwuchtwellen 1, die mit doppelter Kurbelwellendrehzahl gegensinnig rotieren. Zum Antrieb der Unwuchtwelle 1 erforderliche Anbauteile, wie beispielsweise ein Ketten- oder Zahnrad fehlen zwecks vereinfachter Darstellung.

Die geschmiedete Unwuchtwelle 1 weist zwei im Querschnitt kreisförmige Lagerzapfen 2 und 3 auf, die induktiv gehärtet sind und an denen die Unwuchtwelle 1 in der Brennkraftmaschine radial wälzgelagert ist. Jeweils zu beiden Seiten an die Lagerzapfen 2, 3 angrenzende Wellenabschnitte 4 bis 7 sind als nicht gehärtete Unwuchtabschnitte ausgebildet, so dass die Unwuchtwelle 1 einen zu deren Rotationsachse 8 (siehe Figur 2) exzentrischen und die Unwucht erzeugenden Massenschwerpunkt aufweist.

Die Figuren 2 und 3 zeigen den Lagerzapfen 2 in vergrößerter Darstellung mit bzw. ohne darauf montiertem Nadellager 9, wobei die nachstehenden Erläuterungen in gleicher Weise für den Lagerzapfen 3 gelten. Der Lagerzapfen 2 ist mit einer feinbearbeiteten und hier gehonten Innenlaufbahn 10 für die Nadelrollen 11 versehen und springt über einen etwa 180° betragenden Teilumfang gegenüber Axialschultern 12 und 13 der angrenzenden Wellenabschnitte 4, 5 radial zurück. Die Axialschultern 12, 13 dienen als kreisringstückförmige Axialanlaufflächen für die Axialstirnseiten 14 und 15 des mit 16 bezeichneten Käfigs des Nadellagers 9, welcher zwischen den Axialschultern 12, 13 mit geringem Axialspiel eingepasst ist. Beidseits der Innenlaufbahn 10 verlaufende Freistiche 17 und 18 sind bezüglich ihrer Breite so dimensioniert, dass über den gesamten Umfangsbereich der Axialschultern 12, 13 deren Axialabstand D zueinander deutlich größer als die dazwischen bestehende Breite B1 der Innenlaufbahn 10 ist.

Diese konstruktive Ausgestaltung des Lagerzapfens 2 bewirkt zum einen, dass bei der Induktiverwärmung der Innenlaufbahn 10 eine ausreichend hohe Wärmeabfuhr über die Freistiche 17, 18 erfolgt und die Axialschultern 12, 13 zugunsten einer erheblich erhöhten Rissspannungsstabilität thermisch geschützt sind. Zum anderen ermöglichen die hier etwa 3mm breiten Freistiche 17, 18 einen ausreichenden Überlauf für das in den Endlagen axial übertretende Honwerkzeug zur Feinbearbeitung der Innenlaufbahn 10.

Wie es weiter in Figur 2 verdeutlicht ist, wird die Innenlaufbahn 10 bei Rotation der Unwuchtwelle 1 mit einer mitrotierenden Unwuchtlast beaufschlagt, so dass sich auf der Innenlaufbahn 10 eine - von dynamischen Effekten abgesehen - stationäre, d.h. relativ zur rotierenden Innenlaufbahn 10 stillstehende Lastzone 19 ausbildet, wie es durch den gepunktet dargestellten Oberflächenabschnitt symbolisiert ist. Die Lastzone 19 verläuft innerhalb des 180°-Teilumfangs der Axialschultern 12, 13 und symmetrisch zu diesen. Die geringe Belastung der Innenlaufbahn 10 außerhalb der Lastzone 19 ermöglicht die Gestaltung der Innenlaufbahn 10 mit einer umfangsveränderlichen Breite derart, dass die Innenlaufbahn 10 ausgehend von der Lastzone 19 außerhalb der Lastzone 19 mit einer Breite B2 deutlich verjüngt ist.

Das in Figur 3 auf dem Lagerzapfen 2 montiert dargestellte Nadellager 9 ist so ausgeführt, dass im Bereich der Lastzone 19 die Breite B1 der Innenlaufbahn 10 größer als die Länge L der Nadelrollen 11 ist, während sich dieses Verhältnis bezüglich der Breite B2 umkehrt. Aus Gründen einer möglichst homogenen Massenverteilung, einer verbesserten Ölnebelschmierung der Nadelrollen 11 und der Gewichtsersparnis ist der längsgeschlitzte und auf den Lagerzapfen 2 aufgeclipste Kunststoffkäfig 16 zweireihig von Öffnungen 20 durchsetzt, die axial beidseits der Nadelrollen 11 verlaufen.

### Liste der Bezugszahlen

- 1: Unwuchtwelle
- 2: Lagerzapfen
- 3: Lagerzapfen
- 4: Wellenabschnitt
- 5: Wellenabschnitt
- 6: Wellenabschnitt
- 7: Wellenabschnitt
- 8: Rotationsachse
- 9: Nadellager
- 10: Innenlaufbahn
- 11: Nadelrolle
- 12: Axialschulter
- 13: Axialschulter
- 14: Axialstirnseite
- 15: Axialstirnseite
- 16: Käfig
- 17: Freistich
- 18: Freistich
- 19: Lastzone
- 20: Öffnung

- D: Axialabstand der Axialschultern
- B1: Breite der Innenlaufbahn zwischen den Axialschultern
- B2: Breite der Innenlaufbahn im Bereich der Verjüngung
- L: Länge der Nadelrollen

## Patentansprüche

1. Lageranordnung umfassend eine Unwuchtwelle (1) mit einem zu deren Rotationsachse (8) exzentrischen Massenschwerpunkt und einem Lagerzapfen (2, 3) und ein auf dem Lagerzapfen (2, 3) angeordnetes Nadellager (9) mit einem Käfig (16) und darin aufgenommenen Nadelrollen (11), wobei der Lagerzapfen (2, 3) mit einer gehärteten und feinbearbeiteten Innenlaufbahn (10) für die Nadelrollen (11) versehen ist und gegenüber Axialschultern (12, 13) angrenzender Wellenabschnitte (4, 5, 6, 7) radial zurückspringt, welche Axialschultern (12, 13) als Anlaufflächen für Axialstirnseiten (14, 15) des zwischen den Axialschultern (12, 13) eingepassten Käfigs (16) dienen, **dadurch gekennzeichnet, dass** der Lagerzapfen (2, 3) nur teilumfänglich gegenüber den Axialschultern (12 ,13) radial zurückspringt und beidseits der Innenlaufbahn (10) Freistiche (17, 18) verlaufen, deren Breite mit jeweils mindestens 2 mm so dimensioniert ist, dass über den gesamten Umfangsbereich der Axialschultern (12, 13) deren Axialabstand (D) zueinander deutlich größer als die dazwischen bestehende Breite (B1) der Innenlaufbahn (10) ist, wobei die Innenlaufbahn (10) relativ zu der die Innenlaufbahn (10) in einer Lastzone (19) beaufschlagenden Unwuchtlast im wesentlichen stillsteht, wobei die Lastzone (19) innerhalb des Umfangsbereichs der Axialschultern (12, 13) verläuft.

2. Lageranordnung nach Anspruch 1, **dadurch gekennzeichnet, dass** der Umfangsbereich der Axialschultern (12, 13) mehr als 170° und weniger als 190° beträgt.

3. Lageranordnung nach Anspruch 1, **dadurch gekennzeichnet, dass** die Innenlaufbahn (10) eine umfangsveränderliche Breite (B1, B2) aufweist und ausgehend von der Lastzone (19) außerhalb der Lastzone (19) deutlich verjüngt oder mit einer örtlichen Breite von Null am Umfang unterbrochen ist.

4. Lageranordnung nach Anspruch 1, **dadurch gekennzeichnet, dass** die Innenlaufbahn (10) mittels Honen feinbearbeitet ist.

5. Lageranordnung nach Anspruch 1, **dadurch gekennzeichnet, dass** die zwischen den Axialschultern (12, 13) bestehende Breite (B1) der Innenlaufbahn (10) größer als die Länge (L) der Nadelrollen (11) ist, wobei der Käfig (16) von umfangsverteilten Öffnungen (20) durchsetzt ist, die axial beidseits der Nadelrollen (11) verlaufen.

## Claims

1. Bearing arrangement, comprising an unbalanced shaft (1) with a mass centre of gravity eccentric with respect to the rotational axis (8) thereof and with a journal (2, 3), and a needle bearing (9) which is arranged on the ournal (2, 3) and has a cage (16) and needle rollers (11) accommodated therein, wherein the journal (2, 3) is provided with a hardened and finely machined inner raceway (10) for the needle rollers (11) and snaps back radially in relation to axial shoulders (12, 13) of adjacent shaft sections (4, 5, 6, 7), which axial shoulders (12, 13) serve as run-on surfaces for axial end sides (14, 15) of the cage (16) fitted between the axial shoulders (12, 13), **characterized in that** the journal (2, 3) snaps back radially only partially circumferentially in relation to the axial shoulders (12, 13), and undercuts (17, 18) run on both sides of the inner raceway (10), the width of which undercuts is dimensioned to be at least 2 mm in each case such that, over the entire circumferential region of the axial shoulders (12, 13), the axial distance (D) of said axial shoulders in relation to each other is significantly greater than the width (B1), which exists in-between, of the inner raceway (10), wherein the inner raceway (10) is substantially at a standstill relative to the unbalanced load acting on the inner raceway (10) in a load zone (19), wherein the load zone (19) runs within the circumferential region of the axial shoulders (12, 13).

2. Bearing arrangement according to Claim 1, **characterized in that** the circumferential region of the axial shoulders (12, 13) is more than 170° and less than 190°.

3. Bearing arrangement according to Claim 1, **characterized in that** the inner raceway (10) has a width (B1, B2) which is variable in circumference and, starting from the load zone (19), significantly tapers outside the load zone (19) or is interrupted by a local width of zero on the circumference.

4. Bearing arrangement according to Claim 1, **characterized in that** the inner raceway (10) is finely machined by means of honing.

5. Bearing arrangement according to Claim 1, **characterized in that** the width (B1), which exists between the axial shoulders (12, 13), of the inner raceway (10) is larger than the length (L) of the needle rollers (11), wherein the cage (16) is interspersed by circumferentially distributed openings (20) which run axially on both sides of the needle rollers (11).

## Revendications

1. Agencement de palier comprenant un arbre à balourd (1) avec un centre de gravité de masse excentrique par rapport à son axe de rotation (8) et un tourillon de palier (2, 3), et un palier à aiguilles (9) disposé sur le tourillon de palier (2, 3) avec une cage (16) et des rouleaux à aiguilles (11) reçus dans celle-ci, le tourillon de palier (2, 3) étant pourvu d'un chemin de roulement interne (10) durci et usiné avec précision pour les rouleaux à aiguilles (11) et butant radialement contre des portions d'arbre (4, 5, 6, 7) adjacentes à des épaulements axiaux (12, 13), lesquels épaulements axiaux (12, 13) servent de surfaces de butée pour des côtés frontaux axiaux (14, 15) de la cage (16) ajustée entre les épaulements axiaux (12, 13), **caractérisé en ce que** le tourillon de palier (2, 3) bute radialement seulement sur une partie de sa périphérie contre les épaulements axiaux (12, 13) et des dégagements par rainure (17, 18) s'étendent de chaque côté du chemin de roulement intérieur (10), leur largeur, à chaque fois d'au moins 2 mm, étant dimensionnée de telle sorte que sur toute la région périphérique des épaulements axiaux (12, 13), leur espacement axial (D) l'un de l'autre soit -nettement plus grand que la largeur du chemin de roulement interne (10) existant entre eux (B1), le chemin de roulement interne (10) étant essentiellement immobile par rapport à la charge de balourd sollicitant le chemin de roulement interne (10) dans une zone de charge (19), la zone de charge (19) s'étendant à l'intérieur de la région périphérique des épaulements axiaux (12, 13).

2. Agencement de palier selon la revendication 1, **caractérisé en ce que** la région périphérique des épaulements axiaux (12, 13) est supérieure à 170° et inférieure à 190°

3. Agencement de palier selon la revendication 1, **caractérisé en ce que** le chemin de roulement interne (10) présente une largeur de périphérie variable (B1, B2) et se rétrécit nettement à partir de la zone de charge (19) à l'extérieur de la zone de charge (19), ou est interrompu avec une largeur locale nulle à la périphérie.

4. Agencement de palier selon la revendication 1, **caractérisé en ce que** le chemin de roulement interne (10) est usiné avec précision par honage.

5. Agencement de palier selon la revendication 1, **caractérisé en ce que** la largeur (B1) du chemin de roulement interne (10) existant entre les épaulements axiaux (12, 13) est supérieure à la longueur (L) des rouleaux à aiguilles (11), la cage (16) étant traversée d'ouvertures (20) réparties sur la périphérie, qui s'étendent axialement de chaque côté des rouleaux à aiguilles (11).
